# EUROPEAN PATENT APPLICATION

(11) **EP 4 707 091 A1**
(43) Date of publication of application: **11.03.2026**
(21) Application number: 24199373.2
(22) Date of filing: 10.09.2024
(51) Int. Cl.: B60T 13/68, B60T 13/66, B60T 17/18

(54) **REDUNDANT BRAKE SYSTEM**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); ADLER, Tamas, 2030 Erd (HU); MOLNAR, Peter, 1046 Budapest (HU); THOMEN, Matthias, 70182 Stuttgart (DE); FARKAS, Peter, 3525 Miskolc (HU)

(57) **Abstract**

In a brake system for a commercial vehicle, the commercial vehicle comprises at least one steered axle (F) and at least one non-steered axle (R), at least one pneumatic brake actuator (12) associated with the steered axle (F), at least one pneumatic brake actuator (13) associated with the non-steered axle (R), and an air treatment unit (4). The brake system comprises a redundant electro-pneumatic service brake system and an electro-pneumatic parking brake system, wherein the air treatment unit (4) comprises two integrated pneumatic outputs configured to actuate the pneumatic brake actuators (12) on the steered axles (F) in a sidewise way independently. The brake system can be configured such that the at least one pneumatic brake actuator (12) associated with the steered axle (F) is a pneumatic service brake actuator (12), and/or the at least one pneumatic brake actuator (13) associated with the non-steered axle (R) is a pneumatic spring brake actuator (13). The brake system can further be configured such that the two integrated pneumatic outputs of the air treatment unit (4) comprise a two-channel pneumatic relay valve, wherein the two-channel pneumatic relay valve is configured to pneumatically control the brake actuators (12) on the steered axles (F) independently.

## Description

The invention relates to a brake system for a commercial vehicle comprising a redundant electro-pneumatic service brake system and an electro-pneumatic parking brake system.

The autonomous operation of transport vehicles is a new field of innovations. More sophisticated functions require special hardware infrastructure. Until present day, commercial vehicle systems require the presence and attention of the driver. However, in the future, the driver will be less involved into the driving control task of the vehicle. Therefore, automated systems are going to take over more significant driving functions, which requires increased reliability levels and consequently different types of system redundancies. Moreover, from a certain share of total production onwards, such vehicles will either be designed without a cab at all or only with an emergency cab for cost reasons. Accordingly, the driver interface - i.e., the brake pedal - can either be simplified, e.g., without pneumatics, or even eliminated altogether.

This technical situation encompasses the problem that commercial vehicles nowadays use electro-pneumatic or by-wire brake systems where the electronic part of the control is realised as a single circuit control. In case of malfunction of the control electronics the driver can control the pneumatic part of the brake system by his/her foot because a two-circuit pneumatic backup system is still available.

In case of highly automated vehicles where the driver is not anymore in the control loop, or even not available or present in the vehicle, the above brake system would be unsatisfactory since there is no means which would substitute the brake control of the driver in case of malfunction of the single electronic control circuit. Therefore, some redundancy must be added to the control of the brake system.

Publication DE 102008009043 B3 shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Publication EP 3626558 B1 describes pneumatic booster valves which can control the backup ports of the axle modulators and optionally the non-inverted input of the trailer control module. These booster valves can be controlled by a dedicated brake control ECU or by the electronic parking brake unit, which can accept electric brake demands and, in this way, pneumatics can be eliminated from the cabin.

Publication EP 3626559 A1 is about a redundant electro-pneumatic brake system, where the axle pressure modulators are equipped with redundant digital communication line towards a secondary brake control ECU. Moreover, these axle modulators do have redundant electric supply. This solution enables to control of the redundant circuit electrically, so pneumatics can be eliminated from the cabin, and the redundant brake system can provide full ESP functionality as well.

Publication EP 3415386 A1 describes a redundant electro-pneumatic brake system, where the electronic parking brake system acts as redundant brake by controlling the spring brake chambers on the rear axle, and by utilizing an inverting relay, the backup port of the front axle modulator can be controlled by the EPB (Electronic Parking Brake) system as well.

Publication EP 3626557 B1 describes a redundant electro-pneumatic brake system, where the electronic parking brake system acts as redundant brake by controlling the spring brake chambers on the rear axle, and by utilizing an non-integrated electro-pneumatic booster valve, the backup port of the front axle modulator can be controlled by the EPB system as well.

Publication EP 3626557 B1 also describes a multiple redundant brake system, which is a combination of the redundant pressure modulators and a redundant electronic parking brake system. In this way, there are three independent electro pneumatic brake systems available on the vehicle which can accept electric brake demands. That enables on the one hand the elimination of pneumatics from the cabin, on the other hand, the vehicle can continue driving in autonomous mode in case of a single failure of the brake system.

Publication EP 2794368 A1 shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

Publication EP 2229302 A1 shows a redundant brake system for a commercial vehicle. The system utilizes pneumatic brake system as primary and an electro-mechanical system as redundant brake system. All axles are equipped with both types of brake actuators.

Publication EP 3938255 A1 describes a redundant brake system, where the electronic parking brake can drive the front axle modulator's backup port by using an inverting relay valve. Moreover, using a select high valve at the backup port, either the inverting relay, or the brake pedal's pneumatic backup circuit can control the backup port of the front axle modulator, so there is still pneumatics in the cabin.

Publication EP 3749558 A1 discloses an electro-pneumatic redundant brake system, which uses wheel modulators having redundant pneumatic supply. To ensure circuit separation, another service brake circuit is introduced separated by a protection valve, and this circuit can act as redundant pneumatic supply for the electro-pneumatic wheel modules.

Publication EP 4116161 A1 is about a redundant brake system, which utilizes the electronic parking brake system as redundant brake system. The EPB module - which can be integrated into the air treatment unit - consists of a valve arrangement having two inverting and two non-inverting outputs to control the front and rear service brake modulator's backup ports, the front and rear parking brake actuators, and the trailer control module independently as well to implement a redundant electro-pneumatic brake system. The EPB module (and the primary brake control ECU) can receive brake demands directly from the foot brake module or from both autonomous driving ECUs.

Publication EP 3452346 A1 describes a redundant brake system, where the electronic parking brake can drive the rear axle parking brake chambers as a redundant brake circuit. Moreover, using a pneumatic booster valve the backup port of the front axle modulator can be controlled. By adding a bypass valve to this line either the foot brake module's pneumatic outlet port or the pneumatic outlet port of the booster can be connected to the backup port of the front axle modulator. But still, in this way pneumatics is still present in the cabin.

Publication EP 3600992 A1 describes a redundant brake system, where the electronic parking brake can drive the front axle modulator's backup port by using the trailer control module's pneumatic control outlet (yellow line). Moreover, using a select high valve at the backup port, either the inverting relay, or the brake pedal's pneumatic backup circuit can control the backup port of the front axle modulator, so there is still pneumatics in the cabin.

Publication EP 3600994 A1 describes a redundant brake system, where the electronic parking brake is integrated into the trailer control module to implement the redundant electro-pneumatic brake system for a CV.

Publication EP 3787942 A1 discloses a redundant electro pneumatic brake system, where the front and rear axle pressure modulators are having redundant pneumatic supply. Therefore, a third independent service brake pneumatic circuit must be introduced to ensure circuit separation. The redundant axle modules can accept brake demands directly from both autonomous driving ECUs and optionally from a dedicated brake control ECU. The parking module, which can be integrated into the air treatment unit forms the redundant pair of the primary brake circuit. The EPB module does have an inverted output to control the spring brake actuators, and a non-inverting pneumatic outlet port to optionally control the axle pressure modulator's backup port. The axle modules can control service brake actuators only. Parking brake actuators being controlled by independent EPB module.

Publication EP 4001031 A1 describes a brake system, where the electronic parking brake as a redundant brake system equipped with dedicated yaw-rate, acceleration, and wheel-speed sensors to provide full ESP functionality by the redundant system as well. The parking brake module can control the front and rear spring brake actuators independently.

Publication EP 3787943 A1 describes a redundant electro pneumatic brake system, where all brake actuators are controlled by a wheel pressure modulator having redundant pneumatic supply. Therefore, a third independent service brake pneumatic circuit must be introduced to ensure circuit separation. All the wheel pressure modulators can receive brake demands from both autonomous driving ECUs, but the wheel modules can control service brake actuators only. Parking brake actuators being controlled by dedicated EPB module.

It is an object of the present invention to overcome the above discussed problems that are present in the prior art and to provide a respectively improved brake system having suitable redundancy to reliably control the brake system of a commercial vehicle.

According to the present invention, this aim is achieved by a brake system for a commercial vehicle as defined by claim 1. Advantageous embodiments of the invention are defined by the dependent claims 2 to 15.

Accordingly, in a brake system according to the present invention, a commercial vehicle comprises at least one steered axle and at least one non-steered axle, at least one pneumatic brake actuator associated with the steered axle, at least one pneumatic brake actuator associated with the non-steered axle, and an air treatment unit. The brake system is characterized by a redundant electro-pneumatic service brake system and an electro-pneumatic parking brake system, wherein the air treatment unit comprises two integrated pneumatic outputs configured to actuate the pneumatic brake actuators on the steered axles in a sidewise way independently.

This sidewise independent actuation possibility on a steered axle provides that the brake actuators on the left and on the right side of the axle (usually the front left and front right brake actuators) can be controlled independently. Accordingly, the brake actuator on the front left side and the brake actuator on the front right side can be controlled independently from each other by the redundant system.

The brake system according to the invention is preferably configured such that the at least one pneumatic brake actuator associated with the steered axle is a pneumatic service brake actuator, and/or the at least one pneumatic brake actuator associated with the non-steered axle is a pneumatic spring brake actuator.

The brake system according to the invention is preferably further configured such that the two integrated pneumatic outputs of the air treatment unit comprise a two-channel pneumatic relay valve, wherein the two-channel pneumatic relay valve is configured to pneumatically control the brake actuators on the steered axles independently.

Thus, according to the invention, a secondary brake control unit or system or function is provided besides a primary electronic brake control unit or system (EBS). To achieve a redundant electro-pneumatic brake system, the secondary brake control system can be integrated into the air treatment system of a commercial vehicle to lower systems costs. The invention describes a system where the air treatment unit comprises two integrated pneumatic outputs, particularly a two-channel pneumatic relay valve, which is controlled by the integrated brake control to actuate the service brake actuators on the front or steered axle of a commercial vehicle independently. The wheel brakes of the rear or non-steered axle can be controlled by the integrated electronic parking brake module (EPB) via the spring brake actuators.

According to an embodiment of the invention, the electronic brake control unit is also integrated into the air treatment unit. Together with the electronic brake control unit, further functions can also be integrated into the air treatment unit, particularly a vehicle dynamics control function.

According to a further embodiment of the invention, the brake system comprises a parking brake module (PBM) which is integrated into the air treatment unit. In an optional or alternative embodiment, the brake system comprises an electronic parking brake module (EPB) which is configured as a standalone unit.

In further embodiments of the invention, the brake system is configured such that the air treatment unit receives the electronic parking brake demand signals and/or the electronic service brake demand signals from external sources.

In further embodiments of the invention, the brake system is configured such that the air treatment unit receives the electronic parking brake demand signals from a hand control unit, and/or receives the electronic service brake demand signals from a foot brake sensor, to respectively fulfil driver brake demands.

According to further, alternative or optional embodiments of the invention, the brake system comprises 3/2 solenoid valves and/or pneumatic select-high valves which are respectively configured to provide a circuit separation of the primary pneumatic lines and the redundant pneumatic lines upfront the brake actuators mounted on the steered axles.

In further embodiments of the invention, the brake system is characterized in that the air treatment unit is configured to control a trailer brake system using digital trailer CAN (ISO 11992) communication interface and/or using digital trailer ethernet communication interface.

Further details and advantages of the invention will be explained in the following detailed description of various embodiments of the invention in combination with the attached drawings.
Fig. 1 shows a first embodiment of an electro-pneumatic brake system with a redundant brake control integrated into an air treatment module according to the invention.
Fig. 2 shows another embodiment of an electro-pneumatic brake system with a redundant brake control integrated into an air treatment module according to the invention.
Fig. 3 shows yet another embodiment of an electro-pneumatic brake system with a redundant brake control integrated into an air treatment module according to the invention.

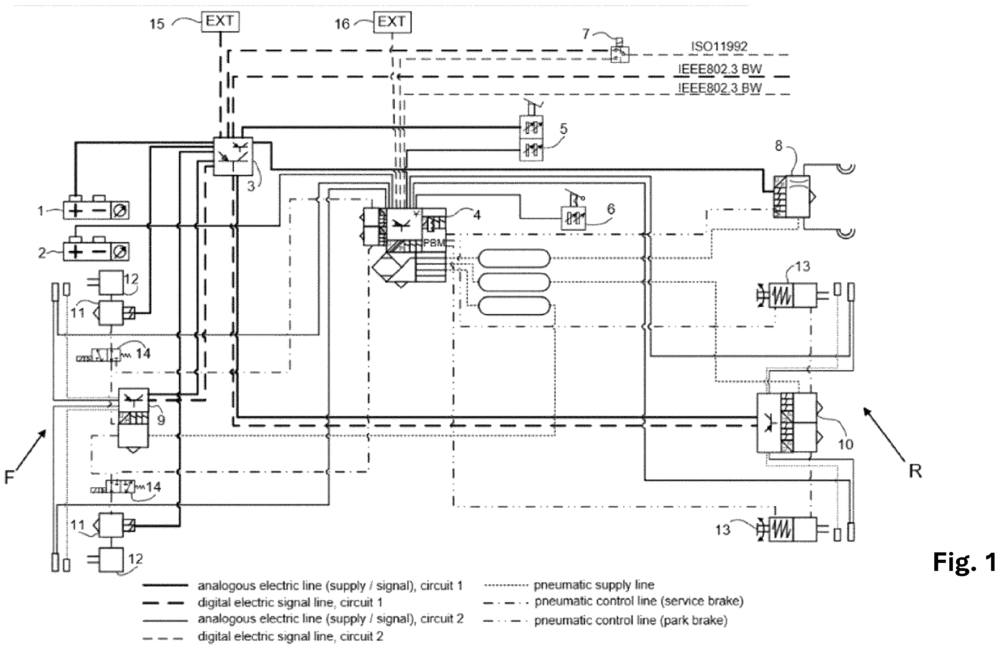

A brake system architecture of a commercial vehicle is shown in Fig. 1. As schematically shown, the vehicle comprises a front axle F and a rear axle R. It will be appreciated that any other number of front and/or rear axles can be provided in the vehicle. Any of these axles can be a steered axle or a non-steered axle. For the purposes of this disclosure, it is assumed that the front axle F is a steered axle and that the rear axle R is a non-steered axle.

The brake system comprises a primary electronic brake control unit or electronic brake system (EBS) 3 which forms and/or is part of a first (electric/electronic) brake circuit. This primary EBS unit is electrically supplied from a battery 1. The EBS unit electronically controls a front axle module (front axle pressure modulator) 9 and a rear axle module (rear axle pressure modulator) 10. The EBS unit electronically also controls a trailer control module 8. Furthermore, the EBS unit electronically controls pressure control valves 11 on the front axle F. The front axle wheel brakes are actuated by service brake chambers/actuators 12 which are pneumatically actuated by the pressure control valves 11. For the wheel brakes on the rear axle R, spring brake combination cylinders/actuators 13 are used which are pneumatically actuated by the rear axle pressure modulator 10.

When the brake system is fully intact, the service brake is controlled by the EBS electronics 3 as a master unit.

To achieve a redundant electro-pneumatic brake system, a secondary brake control unit or function, respectively, is provided which can be integrated into the air treatment system 4 of the commercial vehicle. The air treatment unit 4 is electrically supplied from a battery 2 and forms and/or is part of a second (electric/electronic) brake circuit. The air treatment unit 4, amongst others, supplies pressurized air by pneumatic supply lines to the concerned components of the brake system, as shown in the drawings. Herein, the air treatment unit 4 comprises two integrated pneumatic outputs to actuate the pneumatic brake actuators (here e.g. service brake actuators 12) on the steered axles (here e.g. front axle F) in a sidewise way independently. Accordingly, the brake actuator 12 on the front left side and the brake actuator 12 on the front right side can be controlled independently from each other by the redundant system.

Accordingly, Fig. 1 shows an electro-pneumatic brake system with a redundant brake control that is integrated into the air treatment module 4 and which has the capability to independently actuate service brake chambers/actuators 12 which are mounted to the steered axles F.

In this system, the air treatment unit 4 specifically comprises a two-channel pneumatic relay valve which is controlled by the electronic brake control unit, which is integrated into the air treatment unit 4, to actuate the service brake actuators 12 on the steered axle F independently. The two-channel pneumatic relay valve can control two pneumatic brake actuators independently from each other.

Together with the electronic brake control unit, optionally, further functions, e.g. a vehicle dynamics control, can be integrated into the air treatment unit 4.

The wheel brakes of the non-steered axles (here e.g. rear axle R) can be controlled via the spring brake actuators by the electric/electronic parking brake module (EPB/PBM) which is also integrated into the air treatment unit 4 (cf. Fig. 1).

Considering the redundant electro-pneumatic brake system, in case of a malfunction of the primary electronic brake control unit (EBS) 3 or its electric power supply 1, the brake control function is taken over by the air treatment unit 4, i.e. the above described secondary brake control unit or function. Herein, the axles R equipped by spring brake chambers/actuators 13 are actuated by the parking brake control, while the brake actuators 12 of the other axle(s) F are controlled pneumatically by the integrated relay valves independently.

In case the air treatment unit 4 or its power supply 2 has any malfunction, the primary electronic brake control unit (EBS) 3 will control the brake system as in a normal, intact case, as described above.

As further shown in Fig. 1, so-called 3/2 solenoid valves 14 are provided upfront the service brake actuators 12 that are associated with the steered axle, i.e. here front axle F. These valves 14 serve to accomplish a circuit separation of the primary pneumatic lines and the redundant pneumatic lines. Accordingly, as shown in Fig. 1, valves 14 are controlled by the pneumatic control line coming from the air treatment system 4 and/or by the pneumatic control line coming from the front axle pressure modulator 9. The valves 14 themselves pneumatically control the pressure control valves 11.

Generally, a 3/2 solenoid valve is an essential component in a pneumatic system to operate pneumatic actuators, as it controls the flow and pressure of pressurized gases or liquids. It serves to either open or close the air circuit according to a signal from an electric current. A 3/2 way valve typically has three ports and two positions which can be operated, e.g. pneumatically or electrically, via a solenoid valve.

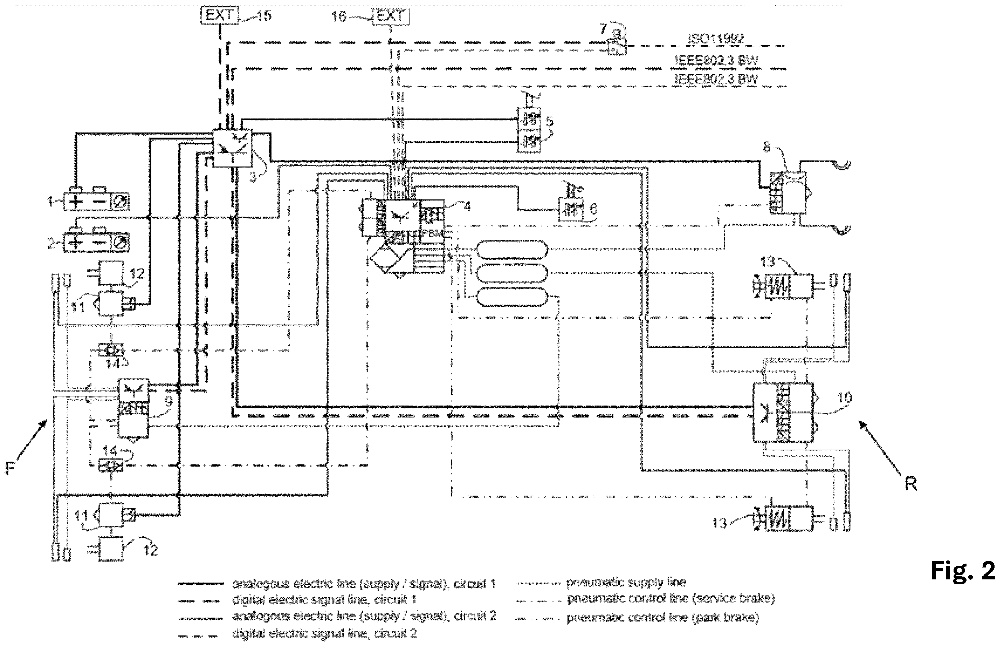

Optionally or as an alternative to the 3/2 solenoid valves 14 shown in Fig. 1, a circuit separation of the primary pneumatic lines and the redundant pneumatic lines can be realized by so-called pneumatic select-high valves 14 which are provided upfront the service brake actuators 12 that are associated with the steered axle, i.e. here front axle F, as shown in Fig 2. A pneumatic select-high valve has two pneumatic inputs and one pneumatic output. The input port with higher pneumatic pressure level (compared to the other input port) will be connected to the output port. Accordingly, Fig. 2 shows an electro-pneumatic brake system with a redundant brake control that is integrated into the air treatment module 4, wherein a separation of the circuits of the primary and the redundant pneumatic lines is accomplished by the pneumatic select-high valves 14.

The attached drawings (Figs. 1 to 3) schematically show in various types of drawing lines (solid lines, broken lines, dotted lines, chain dotted lines, etc.) the various kinds of electric and pneumatic lines that are provided to accomplish the functions of and connections in the brake system (e.g. analogous electric supply and signal lines and digital electric signal lines, each both for the first, second and third (electric/electronic) brake circuits, as well as pneumatic supply lines and pneumatic control lines, both for the service brake and the park brake). Thus, additional features and functions of the brake system, which are not explicitly discussed in this specification, but which are part of the present disclosure, become evident from the drawings.

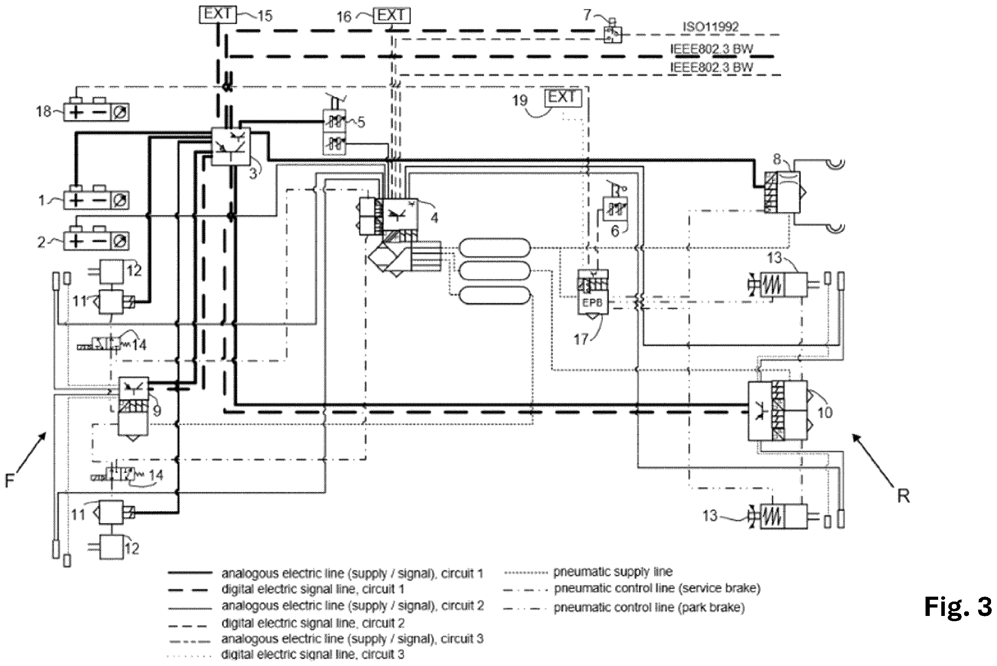

Unless otherwise stated or otherwise shown in the drawings, the preceding explanations for Fig. 1 substantially apply mutatis-mutandis also to Figs. 2 and 3, wherein the same reference numerals are utilized to designate the same or corresponding features.

In the above discussed embodiments of Figs. 1 and 2, the secondary brake control unit or function, respectively, comprising the electric/electronic parking brake module (EPB/PBM), is integrated into the air treatment system 4 of the commercial vehicle. In an alternative embodiment, which is shown in Fig. 3, the electric/electronic parking brake unit (EPB) 17 is a standalone unit which is not integrated into the air treatment module 4. This EPB unit is electrically supplied from a separate battery 18 and forms and/or is part of a third (electric/electronic) brake circuit. Battery 18 is independent of batteries 1 and 2. The EPB unit pneumatically controls the spring brake actuators 13, which are associated with the rear axle R of the vehicle, and the trailer control module 8.

Thus, Fig. 3 shows an electro-pneumatic brake system with a redundant brake control that is integrated into the air treatment module 4, comprising a standalone electric/electronic parking brake module (EPB) 17.

As shown in Figs. 1 to 3, the air treatment unit 4, comprising the integrated brake control, can receive electric/electronic service and/or parking brake demand signals from an external source 16. In the case of the embodiment shown in Fig. 3, the standalone electric/electronic parking brake module (EPB) 17 can receive electric/electronic brake demand signals from an external source 19. The primary electronic brake control system (EBS) 3 can receive electric/electronic brake demand signals from an external source 15. Therein, these brake demand signals can be generated e.g. by external electric/electronic components for Highly Automated/Autonomous Driving (HAD).

Furthermore, the air treatment unit 4, comprising the integrated brake control, can receive electric/electronic parking brake demand signals from a hand control unit (HCU) 6 for the parking brake and/or electric/electronic service brake demand signals from a foot brake sensor (FBS) 5 to respectively fulfil the brake demands generated by the driver of the vehicle. In the case of the embodiment shown in Fig. 3, the standalone electric/electronic parking brake module (EPB) 17 can receive electric/electronic brake demand signals from a hand control unit 6 for the parking brake.

Besides the above described functions, the air treatment unit 4 can also control a trailer brake system 7 using digital trailer CAN (ISO 11992) communication interface/protocol or digital trailer ethernet communication interface.

### LIST OF REFERENCE SIGNS

- 1: electric power supply/battery
- 2: electric power supply/battery
- 3: primary electronic brake control unit / brake system (EBS)
- 4: air treatment unit / system
- 5: foot brake sensor (FBS)
- 6: hand control unit (HCU)
- 7: communication with trailer brake system
- 8: trailer control module
- 9: front axle pressure modulator / front axle module
- 10: rear axle pressure modulator / rear axle module
- 11: pressure control module/valve (PCV)
- 12: service brake chamber/actuator
- 13: spring brake combination cylinder/actuator
- 14: 3/2 solenoid valve / pneumatic select-high valve
- 15: external source for electric/electronic brake demand signals
- 16: external source for electric/electronic service and/or parking brake demand signals
- 17: standalone electric/electronic parking brake unit/module (EPB)
- 18: electric power supply/battery
- 19: external source for electric/electronic brake demand signals
- F: front axle of vehicle
- R: rear axle of vehicle

## Claims

1. Brake system for a commercial vehicle, wherein the commercial vehicle comprises
- at least one steered axle (F) and at least one non-steered axle (R),
- at least one pneumatic brake actuator (12) associated with the steered axle (F),
- at least one pneumatic brake actuator (13) associated with the non-steered axle (R), and
- an air treatment unit (4),
**characterized by** a redundant electro-pneumatic service brake system and an electro-pneumatic parking brake system, wherein the air treatment unit (4) comprises two integrated pneumatic outputs configured to actuate the pneumatic brake actuators (12) on the steered axles (F) in a sidewise way independently.

2. Brake system according to claim 1, **characterized in that** the at least one pneumatic brake actuator (12) associated with the steered axle (F) is a pneumatic service brake actuator (12), and/or the at least one pneumatic brake actuator (13) associated with the non-steered axle (R) is a pneumatic spring brake actuator (13).

3. Brake system according to claim 1 or claim 2, **characterized in that** the two integrated pneumatic outputs of the air treatment unit (4) comprise a two-channel pneumatic relay valve, wherein the two-channel pneumatic relay valve is configured to pneumatically control the brake actuators (12) on the steered axles (F) independently.

4. Brake system according to any one of the preceding claims, **characterized in that** an electronic brake control unit is integrated into the air treatment unit (4).

5. Brake system according to claim 4, **characterized in that** together with the electronic brake control unit further functions are integrated into the air treatment unit (4), particularly a vehicle dynamics control function.

6. Brake system according to any one of the preceding claims, **characterized in that** it comprises a parking brake module (PBM) which is integrated into the air treatment unit (4).

7. Brake system according to any one of the preceding claims, **characterized in that** it comprises an electronic parking brake module (EPB) (17) which is configured as a standalone unit.

8. Brake system according to any one of the preceding claims, **characterized in that** it is configured such that the air treatment unit (4) receives the electronic parking brake demand signals from external sources (16).

9. Brake system according to any one of the preceding claims, **characterized in that** it is configured such that the air treatment unit (4) receives the electronic parking brake demand signals from a hand control unit (6) to fulfil driver brake demands.

10. Brake system according to any one of the preceding claims, **characterized in that** it is configured such that the air treatment unit (4) receives the electronic service brake demand signals from external sources (16).

11. Brake system according to any one of the preceding claims, **characterized in that** it is configured such that the air treatment unit (4) receives the electronic service brake demand signals from a foot brake sensor (5) to fulfil driver brake demands.

12. Brake system according to any one of the preceding claims, **characterized in that** it comprises 3/2 solenoid valves (14) which are configured to provide a circuit separation of the primary pneumatic lines and the redundant pneumatic lines upfront the brake actuators (12) mounted on the steered axles (F).

13. Brake system according to any one of the preceding claims, **characterized in that** it comprises pneumatic select-high valves (14) which are configured to provide a circuit separation of the primary pneumatic lines and the redundant pneumatic lines upfront the brake actuators (12) mounted on the steered axles (F).

14. Brake system according to any one of the preceding claims, **characterized in that** the air treatment unit (4) is configured to control a trailer brake system (7) using digital trailer CAN (ISO 11992) communication interface.

15. Brake system according to any one of the preceding claims, **characterized in that** the air treatment unit (4) is configured to control a trailer brake system (7) using digital trailer ethernet communication interface.
